# EUROPEAN PATENT APPLICATION

(11) **EP 1 808 698 A1**
(43) Date of publication of application: **18.07.2007**
(21) Application number: 06075094.0
(22) Date of filing: 13.01.2006
(51) Int. Cl.: G01N 35/00, B01L 3/00

(54) **Reagent kit and analyzer**

(71) Applicant: F.HOFFMANN-LA ROCHE AG, 4070 Basel (CH); Roche Diagnostics GmbH, 68305 Mannheim (DE)
(72) Inventor: Veen, Gerhard, D-79618 Rheinfelden (DE); Fanger, Peter, CH-6312 Steinhausen (CH)
(74) Representative: Ventocilla, Abraham

(57) **Abstract**

A reagent kit adapted for being used in an automatic analytical apparatus. The reagent kit comprises at least a first reagent container (12) and a second reagent container (13) which have the same height, a kit cover (14) for covering and for holding the upper parts of said at least two reagent containers (12, 13) together, a first tray (16) for holding the bottom part of the first reagent container (12), and a second tray (17) for holding the bottom part of the second reagent container (13). Reagent containers (12, 13) are so configured and dimensioned that when they are assembled together they fill the entire space comprised between kit cover (14) and the trays (16, 17) with exception of a tubular volume (21, 37) which allows air circulation through said reagent kit. The sum of the height of the side walls of the kit cover (14) and the height of the side walls of the trays (16, 17) is smaller than the height of the reagent containers (12, 13).

## Description

### FIELD OF THE INVENTION

The invention relates to a reagent kit for use in an automatic analytical apparatus and in particular in an automatic clinical chemistry analyzer.

The invention also relates to an automatic analytical apparatus adapted for using a plurality of reagent kits according to the invention.

### BACKGROUND OF THE INVENTION

In automatic analytical apparatuses, it is desirable to process reagent kits which hold reagent containers completely automatically. Before being first used in the apparatus and between pipetting operations, the reagent containers also should be kept closed by a closure to avoid loss of reagent or shortening the useful life of the reagents.

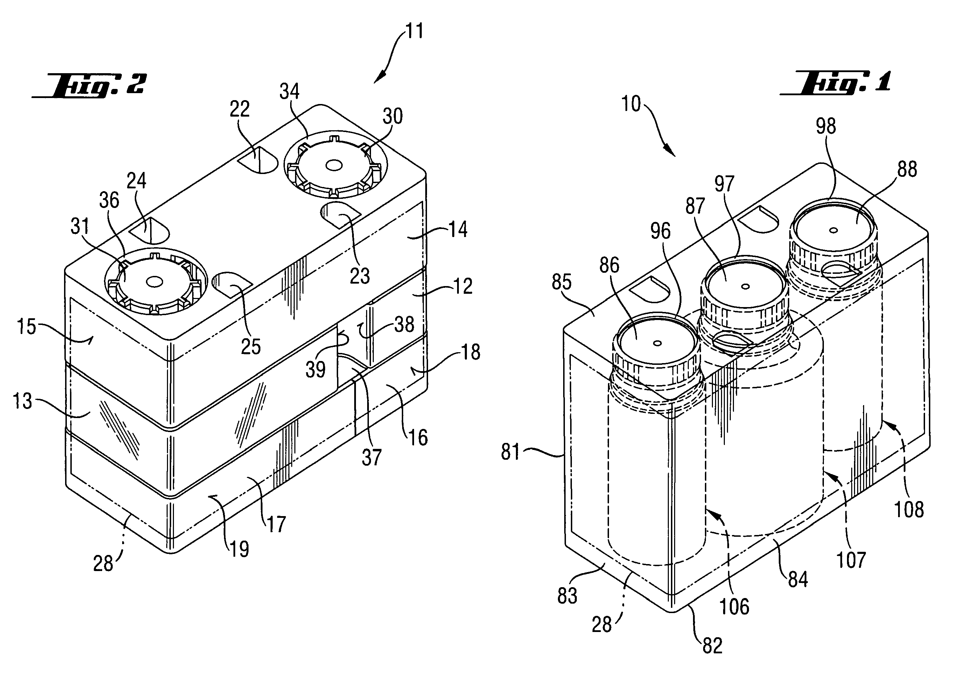

U.S. Patent Specification No. 5,578,272 describes a prior art reagent kit of the above-described kind. As shown by Fig. 1 this known reagent kit 10 has a cuboid casing 81 having a bottom 82 , side walls 83, 84, a removable lid 85 and reagent containers 106, 107, 108 disposed in the casing. Each of these reagent containers has a cylindrical body and is closed by a closure 86, 87, 88 which is adapted for being perforated by the needle of the pipetting device of an analytical apparatus. Lid 85 has openings 96, 97, 98 through which the contents of the reagent containers 106, 107, 108 are accessible for automatic pipetting operations. Lid 85 and bottom 82 of casing 81 have openings which allow circulation of cooled air through the casing and around the reagent containers 106, 107, 108 in order to ensure that these are kept at the required temperature.

It is desirable to increase the total amount of reagents that can be stored in a reagent kit without increasing the cuboid space assigned to such a kit in an analyzer.

It is also desirable to have a reagent kit which to have a greater variety of configurations of reagent containers of different sizes or of the same size in order to meet a wider range of different needs concerning both the amounts of reagents needed per period of use (day, week or month) and the variety of reagents needed.

It is further desirable to have a reagent kit wherein one or more paths are provided for circulation of cooled air around the reagent containers in order to ensure that these are kept at the required temperature.

It is also desirable to have a reagent kit which has such a structure that not only provides the above mentioned desirable features, but that also makes possible to reduce its manufacturing costs.

In order to enhance the modes of use of the reagent kit in the analyzer, it is also desirable to have a reagent kit structure which allows automatic removal of the caps of the reagent container with a suitable tool, and which thereby makes possible to use the reagent containers either open (after removal of their caps) or closed.

### SUMMARY OF THE INVENTION

A first aim of the invention is to provide a reagent kit of the above mentioned kind which has the above mentioned desirable properties which are not provided by the above mentioned known reagent kit described by U.S. Patent Specification No. 5,578,272.

According to a first aspect of the invention the above mentioned first aim is achieved by means of a reagent kit defined by claim 1. Claims 1 to 15 define preferred embodiments of this reagent kit.

The main advantages obtained with a reagent kit according to the invention are as follows:
- for a given cuboid space assigned to a reagent kit in an analyzer, the amount of reagents stored in the reagent kit is maximized,
- the structure of a reagent kit according to the invention makes it possible to have several configurations of reagents of different sizes or of the same size in order to meet a wider range of different needs concerning both the amounts of reagents needed per period of use (day, week or month) and the variety of reagents needed,
- one or more paths are provided for circulation of cooled air around the reagent containers in order to ensure that these are kept at the required temperature,
- the structure of the reagent kit according to the invention makes it possible to reduce its manufacturing costs, because manufacture of the reagent kit according to the invention requires less material and because assembling the reagent kits is achieved with less work,
- the structure of the reagent kit according to the invention makes it possible to automatically remove the screwable caps of the reagent containers with a suitable tool and to use the kit with open reagent containers, or to use the reagent containers kept closed with their respective caps, in which case the central part of the caps is piercable by a pipetting needle in order that amounts of reagent required from each reagent container can be taken with the pipetting needle.

A second aim of the invention is to provide an automatic analytical apparatus adapted for using a plurality of reagent kits 11 according to claim 1.

According to a second aspect of the invention the above mentioned second aim is achieved by means of an analytical apparatus defined by claim 16.

The analytical apparatus according to the invention is suitable for completely automatic processing of reagent kits. This reduces the need for labor in handling the analytical apparatus and also increases the reliability when performing a large number of different tests requiring a correspondingly large number of different reagents or combinations thereof.

### BRIEF DESCRIPTION OF THE DRAWINGS

The subject invention will now be described in terms of its preferred embodiments with reference to the accompanying drawings. These embodiments are set forth to aid the understanding of the invention, but are not to be construed as limiting.
- FIG. 1: shows a perspective view of a prior art reagent kit 10 according to the invention;
- FIG. 2: shows a perspective view of a first embodiment of reagent kit 11 according to the invention;
- Fig. 3: shows a side view of reagent kit 11 in Fig. 2;
- Fig. 4: shows a partially exploded perspective view of the components of reagent kit 11 in Fig. 2 from a first point of view;
- Fig. 5: shows a fully exploded perspective view of components of reagent kit 11 in Fig. 2 from the same point of view as the one of Fig. 4;
- Fig. 6: shows a partially exploded perspective view of the components of reagent kit 11 in Fig. 2 from a second point of view opposite to the one of Fig. 5;
- FIGS. 7: shows a top view of lid 85 of reagent kit 11 in FIG. 2;
- FIGS. 8: shows a top view of containers 12 and 13 of reagent kit 11 in FIG. 2;
- FIGS. 9: shows a bottom view of trays 16 and 17 of reagent kit 11 in FIG. 2;
- Fig. 10: shows a partially exploded perspective view of the components of a second embodiment of a reagent kit 11 according to the invention;
- Fig. 11: shows a partially exploded perspective view of the components of a third embodiment of a reagent kit 11 according to the invention;
- FIG. 12: shows a perspective view of an analytical apparatus according to the invention.

| | **REFERENCE NUMERALS IN DRAWINGS** |
|---|---|
| 10 | prior art reagent kit according to EP 0564 970 A2 |
| 11 | reagent kit according to the invention |
| 12 | reagent container |
| 13 | reagent container |
| 14 | cover |
| 15 | side walls of cover 14 |
| 16 | tray for holding the lower part of reagent container 12 |
| 17 | tray for holding the lower part of reagent container 13 |
| 18 | side walls of tray 16 |
| 19 | side walls of tray 17 |
| 21 | tubular volume |
| 22 | web |
| 23 | web |
| 24 | web |
| 25 | web |
| 26 | lugs of cover 14 |
| 27 | grooves of reagent containers 12, 13, 52, 53 |
| 28 | label |
| 29 | lugs of trays 16, 17, 54, 55 |
| 30 | cap |
| 31 | cap |
| 32 | opening of container 12 |
| 33 | opening of container 13 |
| 34 | opening of cover 14 |
| 35 | opening of cover 14 |
| 36 | opening of cover 14 |
| 37 | tubular volume |
| 38 | part of tubular volume 37 |
| 39 | part of tubular volume 37 |
| 45 | cap of reagent container 53 |
| 46 | opening in the bottom wall of tray 16 |
| 47 | opening in the bottom wall of tray 17 |
| 48 | opening in the bottom wall of tray 17 |
| 49 | opening in the bottom wall of tray 17 |
| 50 | opening in the bottom wall of 17 |
| 51 | opening in the bottom wall of 17 |
| 52 | reagent container |
| 53 | reagent container |
| 54 | tray for holding the lower part of reagent container 52 |
| 55 | tray for holding the lower part of reagent container 53 |
| 61 | input station / output station |
| 62 | carrier plate |
| 63 | conveyor belt |
| 66 | gripper |
| 68 | reaction vessel |
| 69 | positioning projection |
| 70 | positioning projection |
| 71 | carriage |
| 72 | rod |
| 73 | carriage |
| 74 | rod |
| 76 | washing station |
| 77 | processing station |
| 78 | barcode reader |
| 79 | processing station |
| 81 | casing |
| 82 | bottom |
| 83 | side wall |
| 84 | side wall |
| 85 | lid |
| 86 | closure of reagent container |
| 87 | closure of reagent container |
| 88 | closure of reagent container |
| 90 | spike |
| 96 | opening of lid 85 |
| 97 | opening of lid 85 |
| 98 | opening of lid 85 |
| 101 | pipetting needle |
| 106 | reagent container |
| 107 | reagent container |
| 108 | reagent container |

### DETAILED DESCRIPTION OF PREFERRED EMBODIMENTS

### EXAMPLE OF A FIRST EMBODIMENT OF A REAGENT KIT ACCORDING TO THE INVENTION

A first embodiment of a reagent kit 11 according to the invention is described hereinafter with reference to Figures 1-9.

Reagent kit 11 comprises e.g. a first reagent container 12 and a second reagent container 13 which have the same height.

Reagent container 12 has a capacity of e.g. 20 milliliter. Reagent container 13 has a capacity of e.g. 60 milliliter.

Reagent kit 11 further comprises a kit cover 14 for covering and for holding the upper parts of reagent containers 12, 13 together. Kit cover 14 has openings 34 and 36 which provide access to reagents contained in reagent containers 12, 13. Kit cover 14 has side walls 15 the height of which is smaller than the height of reagent containers 12 and 13.

Reagent kit 11 further comprises a first tray 16 for holding the bottom part of reagent container 12 and a second tray 17 for holding the bottom part of reagent container 13. Trays 16 and 17 have each a side walls 18 respectively 19 the height of which is smaller than the height of reagent containers 12 and 13. Each of trays 16 and 17 serves as a standing base for the respective reagent container 12 respectively 13.

As shown in particular by Fig. 1, the sum of the height of side walls 15 of kit cover 14 and the height of side walls 18, respectively 19, is smaller than the height of reagent containers 12 and 13.

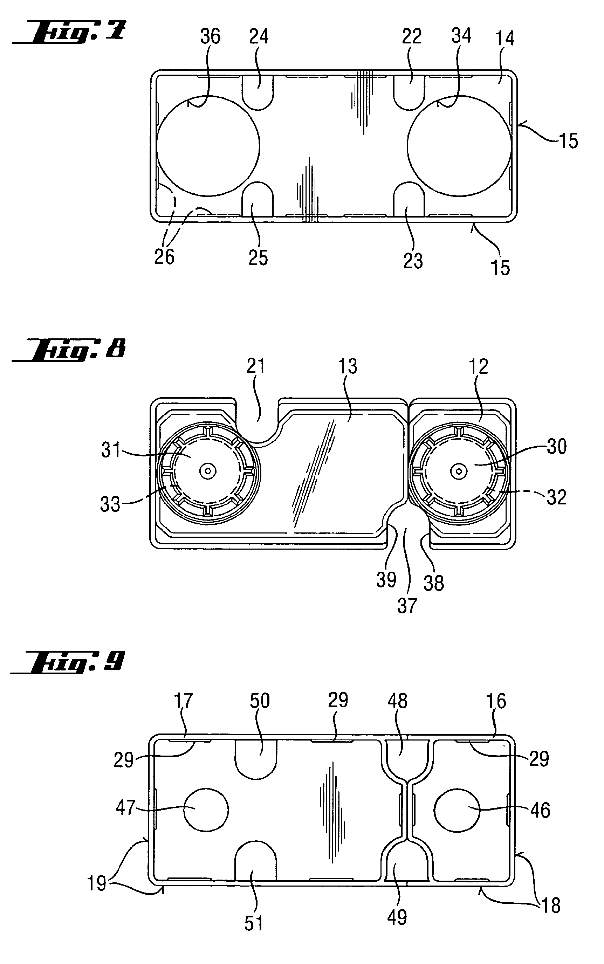

Reagent containers 12 and 13 are so configured and dimensioned that when they are assembled together they fill the entire space comprised between kit cover 14 and trays 16 and 17 with exception of a tubular volume 37 shown in Figures 1 and 4, and a tubular volume 21 shown in Fig. 6, which allow circulation of cooled air through reagent kit 11. Tubular volume 37 comprises a tubular volume 38 along the side wall of reagent container 12 and a tubular volume 39 along the side wall of reagent container 13. Openings 48 and 49 in trays 16 and 17 respectively and openings 46, 47, 50 and 51 shown in Fig. 6 are inlets for cooled air that circulates through kit 11 in order to keep the reagents at the required temperature.

Kit cover 14, trays 16 and 17, and reagent containers 12 and 13 are so configured and dimensioned that they are adapted for forming a self-supporting assembly when they are put together. In a preferred embodiment at least one outer surface of this self-supporting assembly is suitable for fixing on it a label 28, a barcode label, which carries information on the reagents contained in reagent containers 12 and 13.

In a preferred embodiment a machine-readable label 28 is attached to reagent kit 11. In a preferred embodiment a portion of such a label 28 is fixed on a first surface which lies in a first plane and the remaining portion of label 28 is fixed on a second surface which lies in a second plane which is perpendicular to the first plane. In this arrangement label 28 contributes to improve the rigidity and stability of the above-described self-supporting assembly.

In a preferred embodiment the upper part of each of reagent containers 12 and 13 snuggly fits into a cavity of kit cover 14 and the bottom part of each of reagent containers 12, 13 snuggly fits into a cavity of a corresponding tray 16, 17.

In a preferred embodiment kit cover 14 is a snap-on assembling cover which is adapted to snap on the upper part of each of reagent containers 12 and 13. For this purpose, the inner surface of the side walls 15 of cover 14 have lugs 26 which are adapted to engage a groove 27 in the outer surface of the upper portion of reagent containers 12 and 13 .

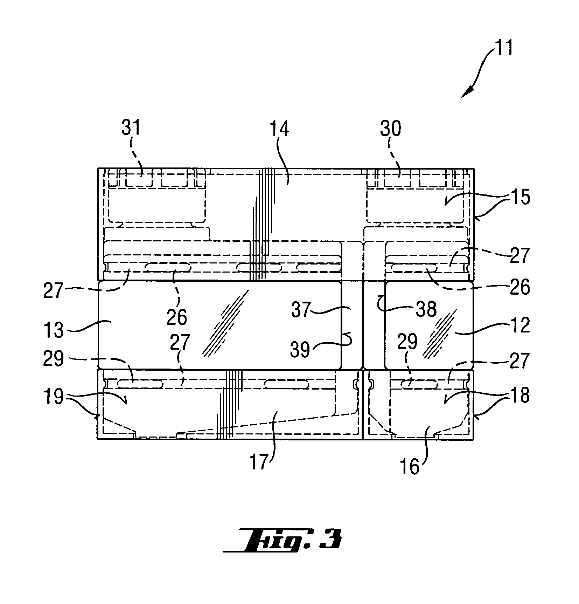

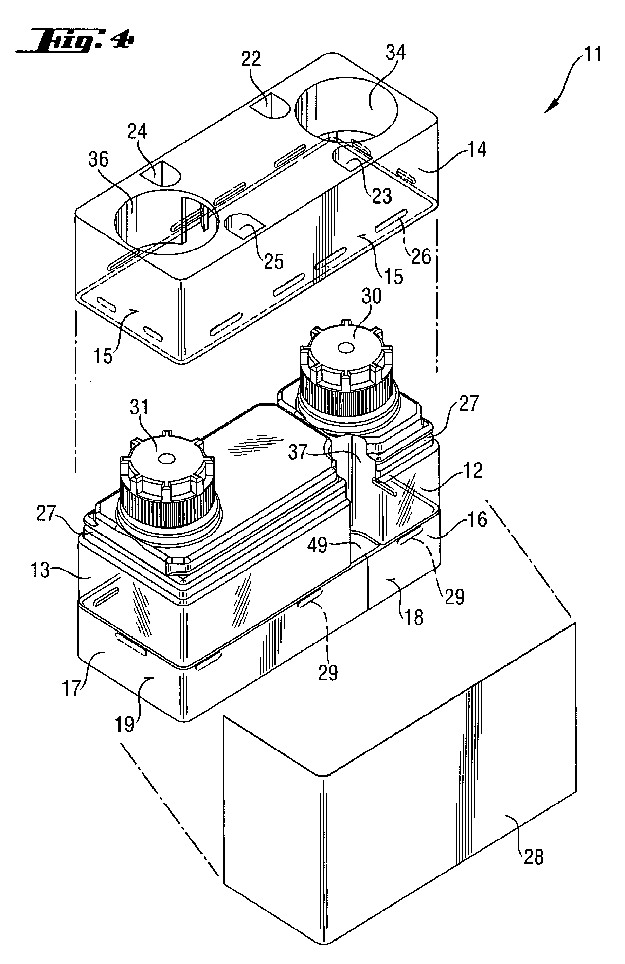

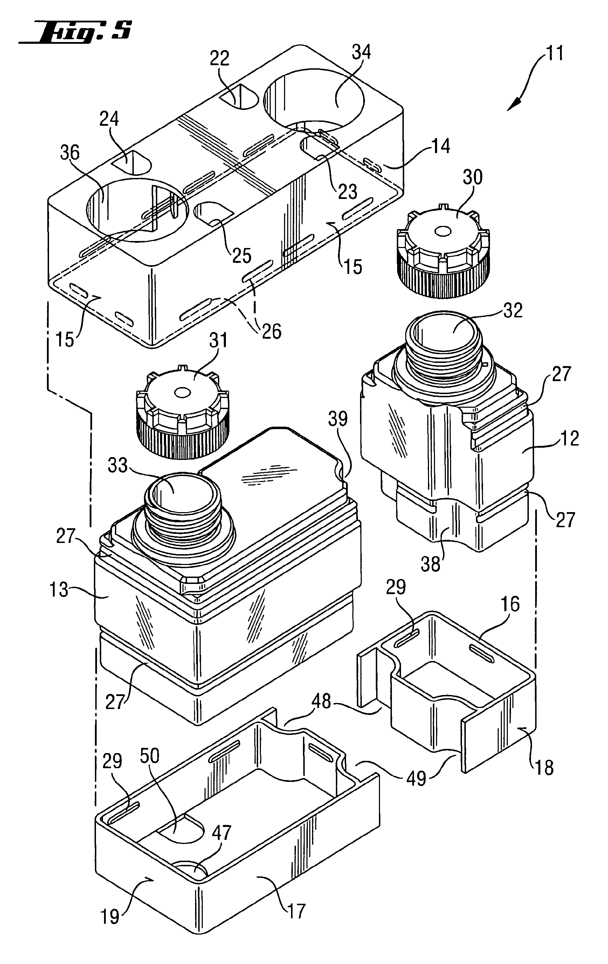

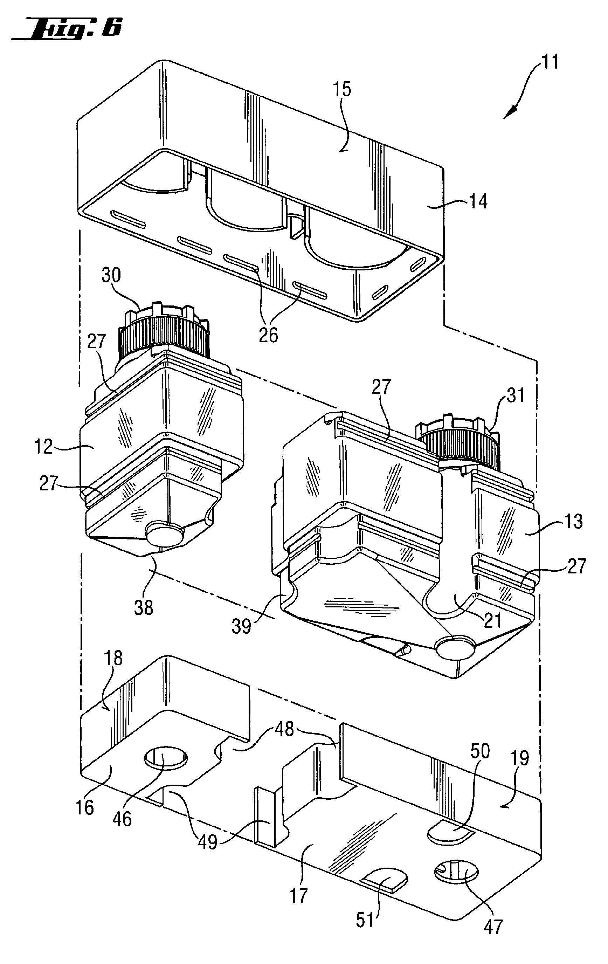

In a preferred embodiment each of the first and second trays 16 and 17 is a snap-on tray which is adapted to snap on the bottom part of a corresponding one of reagent containers 12 respectively 13 when the latter are assembled together. For this purpose, the inner surface of the side walls 18, 19 of trays 16 respectively 17 have lugs 29 which are adapted to engage a groove 27 in the outer surface of the lower portion of reagent containers 12 and 13. Lugs 26 and 29, as well as grooves 27 are shown in particular by Figures 3 to 7 and by Fig. 9.

In a preferred embodiment kit cover 14 and trays 16, 17 are made of a first plastic material and reagent containers 12 and 13 are made of a second plastic material, and the first plastic material is more rigid than the second plastic material.

In a preferred embodiment kit cover 14, reagent containers 12 and 13, and trays 16 and 17 are made of an opaque material. This protects the reagents from environmental light and increases the time period over which the reagent kits can be stored before they are used.

Reagent containers 12, 13 are made of a suitable plastic material, e.g. a high density polyethylene (HDPE) like e.g. Purell PE GF 4750 of Basell (manufacturer) containing a 2% black color batch, e.g. No. Cogranu UN 040.32 of Polyplast (manufacturer).

Cover 14 and trays 16, 17 are made of a suitable plastic material, e.g. an impact resistant polystyrol, e.g. a thermoplastic styrene-butadiene copolymer, e.g. SB-Empera 514 of BP (manufacturer) containing a 2% black color batch, e.g. HS7037 of Schulmann (manufacturer).

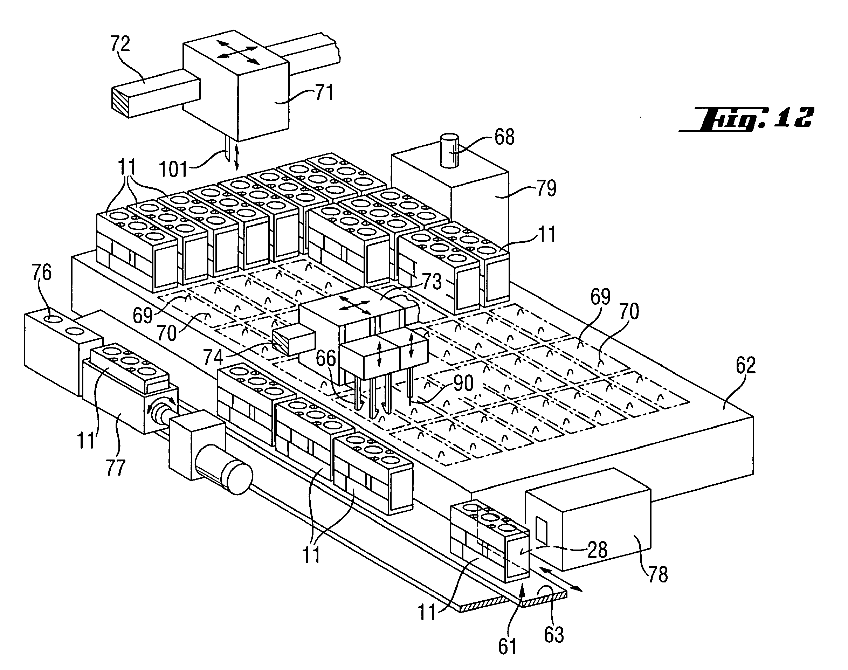

In a preferred embodiment kit cover 14 has webs 22, 23, 24, 25 adapted for being gripped by a gripper which is carried by a carriage 73 of a conveyor of reagent kits shown in Fig. 12.

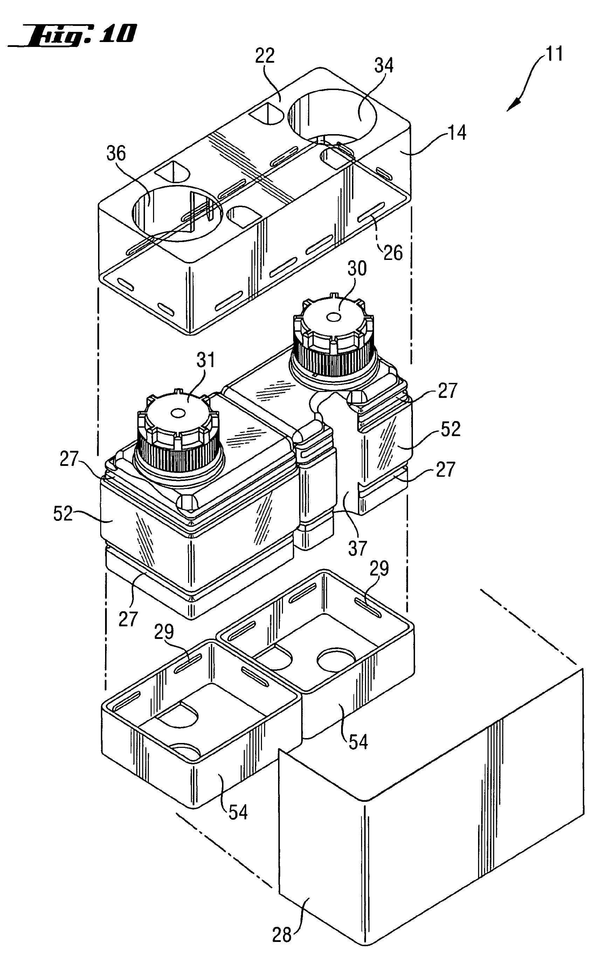

In a preferred embodiment and as shown in particular by Figures 5 and 6, kit cover 14 has openings 34, 36 and each of trays 16 and 17 have openings 46 respectively 47, 50, 51 and all these openings are suitable for circulating air through tubular volume 21 and/or 37 within reagent kit 11.

In a preferred embodiment each of reagent containers 12 and 13 has a substantially cuboid shape and a substantially rectangular cross-section. As shown in particular by Figures 3 and 6, the bottom portion of reagent containers 12 and 13 have each a tapered cross-section that diminishes towards the bottom of the reagent container. This shape minimizes the dead volume of the reagent container, i.e. the rest volume of reagent which cannot be pipetted from the reagent container.

In a preferred embodiment kit cover 14 and trays 16, 17 have each a cuboid shape.

In a preferred embodiment, reagent containers 12 and 13 have each a removable screwable cap 30, 31 having a central portion which is piercable by a pipetting needle. Screwable caps 30, 31 have each the shape of a crown and are removable by means of suitable tool and through openings 34 and 36 of kit cover 14.

As shown by Fig. 5 each of reagent containers 12, 13 has an opening 32 respectively 33 which is adapted to be closed by removable screwable cap 30 respectively 31.

### EXAMPLE OF A SECOND EMBODIMENT OF A REAGENT KIT ACCORDING TO THE INVENTION

A second embodiment of a reagent kit 11 according to the invention is described hereinafter with reference to Figure 10.

Reagent kit 11 in Fig. 10 comprises a first reagent container 52, a second reagent container 52 and two trays 54, one for each of reagent containers 52. First reagent container 52 and second reagent container 52 have the same height and capacity. Reagent containers 52 have each a capacity of e.g. 40 milliliter.

The other features of this second embodiment of a reagent kit 11 are as described above with reference to Figures 1-9.

### EXAMPLE OF A THIRD EMBODIMENT OF A REAGENT KIT ACCORDING TO THE INVENTION

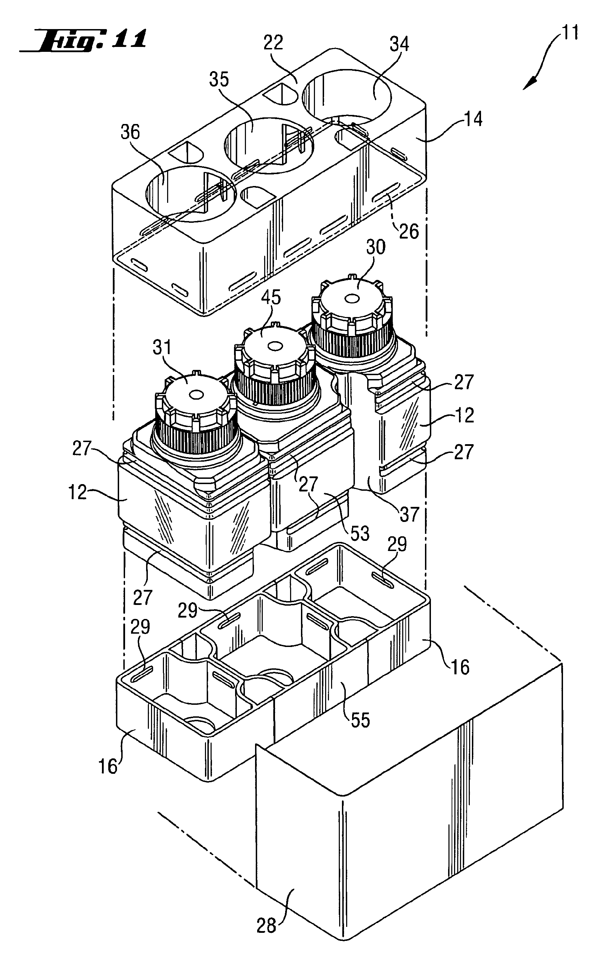

A third embodiment of a reagent kit 11 according to the invention is described hereinafter with reference to Figure 11.

Reagent kit 11 in Fig. 11 comprises a first reagent container 12, a second reagent container 53, a third reagent container 12. Reagent containers 12 and 53 have the same height. Reagent containers 12 have each a capacity of e.g. 20 milliliter. Reagent container 53 has a capacity of e.g. 40 milliliter.

Reagent kit 11 in Fig. 11 further comprises a cover 14 and trays 16, 55 and 16 which correspond to reagent containers 12, 53 and 12 respectively.

In this third embodiment, cover 14 has three openings 34, 35 and 36, and reagent container 53 is closed with a removable screwable cap 45.

The other features of this third embodiment of a reagent kit 11 are as described above with reference to Figures 1-9.

### EXAMPLE OF AN EMBODIMENT OF AN ANALYZER ACCORDING TO THE INVENTION

As described hereinafter with reference to FIG. 12, an automatic analytical apparatus according to the invention is adapted to hold a plurality of reagent kits 11 of the above-described type. As shown in FIG. 12, an analytical apparatus of this kind contains an input station 61 for inserting new reagent kits 11 into the apparatus, and an output station 61 for discharging used reagent kits 11 from the apparatus.

The analyzer shown in Fig. 12 also has a carrier plate 62 on which reagent kits 11 received in the analytical apparatus are disposed in a predetermined matrix, projections 69, 70 being provided for exact positioning of the reagent kits onto carrier plate 62. There also is a conveyor (see e.g., 63, 73 and 66) for conveying reagent kits 11 from input station 61 to carrier plate 62 or from this carrier plate to output station 61 and optionally to other positions inside the analytical apparatus, and an automatic pipetting device (see e.g., 71, 72) for carrying out pipetting operations as required in the analytical apparatus. These pipetting operations include removal of given volumes of reagent from reagent containers within reagent kits 11 and transfer of those volumes to reaction vessels, each of which contains a specimen for examination. Each reagent container is closed by a closure which can be perforated by a pipetting needle of the pipetting device.

A central control device (not shown in FIG. 12) controls all the operations in the analytical apparatus.

Carrier plate 62 can be cooled by a conventional cooling device (e.g., fan, not shown). By this means, and as a result of the aforementioned circulation of air through the reagent kits, the reagents contained therein are uniformly cooled.

In the embodiment shown in FIG. 12, the same location designated as symbol 61 is used as an input station and as an output or delivery station. In that case, the analyzer includes a display showing the status of input/output 61 that indicates whether station 61 is free for inserting reagent kits or whether it is occupied. Alternatively, there can be separate input and delivery stations.

In a preferred embodiment, up to five reagent kits simultaneously can be inserted at input/output station 61. Used reagent kits are automatically returned to input/output station 61, where they are discharged or removed from the apparatus.

As FIG. 12 shows, the analytical apparatus contains a reader 78 disposed at input station 61 for reading machine-readable information, e.g. a bar code carried by a label 28 attached to side walls of reagent kit 11. The information on label 28 is automatically read by reader 78 when a reagent kit 11 is inserted into the input station 61. The information carried in machine-readable form on label 28 contains identification of a test to be performed with reagents contained in a reagent kit and parameters relating to a batch of reagents in a reagent kit.

The conveyor for conveying reagent kits 11 more particularly comprises a conveyor belt 63, which transports reagent kits 28 inserted at input station 61 to the interior of the analyzer or back from there to output station 61, and a grippers 66 guided by a carriage 73 conveying a pipetting needle (not shown) of an automatic pipetting device of the analytical apparatus. Grippers 66 cooperate with corresponding webs 24, 25, 26, 27 of reagent kit 11 to grip reagent kit 11, e.g. from its position on carrier plate 62 or on conveyor belt 63. Carriage 73 carries the grippers 66 together with a pipetting needle (omitted for simplicity in the part of FIG. 12 which shows carriage 73), and for example, a spike 90 for penetrating and making an opening in the central part of a cap of a reagent container and thereby preparing that cap for being pierced by a pipetting needle.

Carriage 73 and a rod 74 on which the carriage 73 moves belong to a conveyor of an automatic pipetting device in the analytical apparatus. The conveyor is used mainly for moving the pipetting needle (omitted for simplicity in FIG. 12) in three directions at right angles to one another, to a number of pipetting positions.

In the preferred embodiment of FIG. 12, a second automatic pipetting device is provided and likewise contains a conveyor for moving a pipetting needle 101. The conveyor of this second pipetting device contains a carriage 71 and a rod 72 on which the carriage 71 moves. The carriage 71 carries pipetting needle 101.

The previously-mentioned pipetting operations are inter alia for removing given volumes of reagent from the containers contained in one of the reagent kits 11 placed on the carrier plate 62 and for transferring them to predetermined reagent vessels 68 each holding a specimen for examination. During its entire period of use in the analytical apparatus, each reagent container can be kept closed by a cap which can be perforated by pipetting needle 101 of the pipetting device, or can be kept open after removal of the cap of the reagent container.

As FIG. 12 shows, the analytical apparatus comprises a processing station 77 in which a reagent kit disposed therein can be pivoted or rolled. If a reagent kit contains a reagent container holding a reagent in freeze-dried form the conveyor of reagent kits automatically brings such a kit to processing station 77 before first use of the kit. At its position on the carrier plate 62 the container is filled beforehand with a suitable amount of water by pipetting. Next, the reagent kit with the container is moved by the gripper 66, operated by the conveyor, from its position on the carrier plate 62 to the processing station 77. At station 77, the reagent kit 11 is pivoted for about 10 minutes so as to efficiently mix and completely dissolve the reagents requiring to be dissolved. All the reagents in a kit are dissolved simultaneously. After the reagents in kit 11 have been dissolved in the processing station 77, the kit is returned to its position on the carrier plate 62.

If required, certain reagent kits can periodically be remixed in the processing station 77 (e.g. once a day) by actuating suitable mixing means in the analytical apparatus.

After the freeze-dried reagents have been dissolved as described above, the kit is broached as previously mentioned.

A station 76 for washing the pipetting needles is disposed alongside the processing station 77.

During operation of the analytical apparatus, volumes of reagent are selectively taken from a kit 11 available on the carrier plate 62 and supplied to a reaction vessel 68 in a station 79 for processing mixtures of specimen and reagent.

Although a preferred embodiment of the invention has been described using specific terms, such description is for illustrative purposes only, and it is to be understood that changes and variations may be made without departing from the spirit or scope of the following claims.

## Claims

1. A reagent kit adapted for being used in an automatic analytical apparatus comprising
at least a first reagent container (12) and a second reagent container (13) having the same height,
a kit cover (14) for covering and for holding the upper parts of said at least two reagent containers (12, 13) together, said kit cover (14) having openings (34, 35, 36) which provide access to reagents contained in said at least two reagent containers (12, 13), said kit cover (14) having a side walls (15) the height of which is smaller than the height of said reagent containers (12, 13),
a first tray (16) for holding the bottom part of said first reagent container (12),
a second tray (17) for holding the bottom part of said second reagent container (13),
said first and second trays having each side walls (18, 19) the height of which is smaller than the height of said reagent containers (12, 13),
said at least two reagent containers (12, 13) being so configured and dimensioned that when they are assembled together they fill the entire space comprised between said kit cover (14) and said trays (16, 17) with exception of a tubular volume (21, 37) which allows air circulation through said reagent kit.

2. A reagent kit according to claim 1, wherein said kit cover (14), said first and second trays (16, 17) and said at least two reagent containers (12, 13) are adapted for forming a self-supporting assembly.

3. A reagent kit according to claim 2, wherein said self-supporting assembly has at least one outer surface suitable for fixing on it a label carrying information on the reagents contained in said at least two reagent containers (12, 13) .

4. A reagent kit according to claim 1, **characterized in that** a machine-readable label (28) is attached to said reagent kit.

5. A reagent kit according to claim 4, wherein said label (28) contributes to improve the rigidity of said self-supporting assembly.

6. A reagent kit according to claim 1, wherein the upper part of each of said at least two reagent containers (12, 13) snuggly fits into a cavity of said kit cover (14) and the bottom part of each of said at least two reagent containers (12, 13) snuggly fits into a cavity of a corresponding tray (16, 17).

7. A reagent kit according to claim 1, wherein said kit cover (14) is a snap-on cover which is adapted to snap on the upper part of each of said at least two reagent containers (12, 13).

8. A reagent kit according to claim 1, wherein each of said first and second trays (16, 17) is a snap-on tray which is adapted to snap on the bottom part of a corresponding one of said at least two reagent containers (12, 13) when the latter are assembled together.

9. A reagent kit according to claim 1, wherein said kit cover (14), said first and second trays (16, 17) are made of a first plastic material and said at least two reagent containers (12, 13) are made of a second plastic material, said first plastic material being more rigid than said second plastic material.

10. A reagent kit according to claim 1, wherein said kit cover (14), said at least two reagent containers and said first and second trays (16, 17) are made of an opaque material.

11. A reagent kit according to claim 1, **characterized in that** said kit cover (14) has webs (22, 23, 24, 25) adapted for being gripped by a gripper which belongs to a conveyor.

12. A reagent kit according to claim 1, wherein said kit cover (14) has at least two openings (34, 35, 36) and each of said trays (16, 17) has each at least one opening (46, 47), said openings being suitable for circulating air through said tubular volume (21) within said reagent kit.

13. A reagent kit according to any of the preceding claims 1-12, wherein each of said at least reagent containers (12, 13) has a substantially cuboid shape and a rectangular cross-section.

14. A reagent kit according to any of the preceding claims 1-13, wherein said kit cover (14) and said first and second trays (16, 17) have each a cuboid shape.

15. A reagent kit according to any of the preceding claims 1-14, wherein said at least two reagent containers (12, 13) have each a screwable cap (30, 31) having a central portion which is piercable by a pipetting needle, said screwable caps (30, 31) being removable by means of suitable tool and through said openings (34, 35, 36) of said kit cover (14).

16. A reagent kit according to any of the preceding claims 1-14, wherein the sum of the height of side walls (15) of cover (14) and the height of side walls (18, 19) is smaller than the height of reagent containers (12, 13).

17. An automatic analytical apparatus adapted for using a plurality of reagent kits (11) according to claim 1, said apparatus being **characterized in that** it contains the following components:
an input station (61) for receiving new reagent kits,
a delivery station (61) for delivering used reagent kits,
a carrier plate (62) on which the reagent kits (11) in the analytical apparatus are arranged in a matrix,
a conveyor (63) for conveying the reagent kits (11) from the input station to the carrier plate (62) or from the carrier plate to the delivery station (61) and optionally to other positions inside the analytical apparatus,
said conveyor (63) including a gripper for gripping the reagent kits by gripping webs (22-25) which are part of the kit cover (14) of the reagent kit (11), and
an automatic pipetting device for carrying out pipetting operations as required in the analytical apparatus, these pipetting operations including removal of given volumes of reagent from reagent containers (12, 13) of said reagent kits and transfer of said volumes to reaction vessels, each of which contains a specimen for examination.
